# EUROPEAN PATENT APPLICATION

(11) **EP 1 146 074 A2**
(43) Date of publication of application: **17.10.2001**
(21) Application number: 01105796.5
(22) Date of filing: 08.03.2001
(51) Int. Cl.: C08K 5/5415, C08K 5/549, C08L 79/08, C09D 179/08, C08G 73/10

(54) **Heat resistant resin composition and process for producing the same**

(30) Priority: 05.04.2000 JP 2000107979
(71) Applicant: Hitachi, Ltd., Chiyoda-ku, Tokyo 101-8010 (JP)
(72) Inventor: Satsu, Yuichi, Hitachi, Ltd., Chiyoda-ku, Tokyo 100-8220 (JP); Takahashi, Akio, Hitachi, Ltd., Chiyoda-ku, Tokyo 100-8220 (JP); Nakai, Harukazu, Hitachi, Ltd., Chiyoda-ku, Tokyo 100-8220 (JP); Suzuki, Masao, Hitachi, Ltd., Chiyoda-ku, Tokyo 100-8220 (JP); Ito, Yuzo, Hitachi, Ltd., Chiyoda-ku, Tokyo 100-8220 (JP); Oohara, Shuichi, Hitachi, Ltd., Chiyoda-ku, Tokyo 100-8220 (JP); Miwa, Takao, Hitachi, Ltd., Chiyoda-ku, Tokyo 100-8220 (JP)
(74) Representative: Strehl Schübel-Hopf & Partner

(57) **Abstract**

A heat resistant resin composition obtained by heat treating a poly(amic acid) varnish comprising a poly(amic acid), an organic silicic compound having a functional group capable of bringing about an addition reaction with at least one of NH group and COOH group of the poly(amic acid), and water, followed by thermal curing, is excellent in heat resistance, small in changes in thermal expansion coefficient and modulus of elasticity at high temperatures, and hardly generating cracks and peeling.

## Description

### BACKGROUND OF THE INVENTION

This invention relates to a heat resistant resin composition improved in physical properties such as modulus of elasticity, thermal expansion coefficient, etc. at high temperatures, a process for producing the same, a semiconductor device using the same and a heat resistant film using the same.

Since polyimide resins are excellent in electrical properties, dynamic properties, and heat resistance, they are widely used as electrical insulating films in module substrates, flexible substrates, thin film layers for substrates for packages, insulating films for tape carriers, and the like. In this case, the substrates or tape carriers are formed by a composite material containing two or more materials including polyimide and a metallic material as essential components, and if necessary, inorganic material(s). In such cases, since the polyimide resins are usually cured at 300 to 400°C, they are required to have the same thermal dimensional stability as metallic materials and inorganic materials at the temperature ranges in both of use temperature and thermal curing temperature. That is, it is required that changes in thermal expansion coefficient and modulus of elasticity hardly take place at a temperature range of -50°C to 400°C.

In order to improve the thermal dimensional stability at high temperatures, improvement in quality of polyimide materials have bee studied. As disclosed in JP-A 63-221130, JP-A 2-14242, JP-A 4-189868, JP-A 7-331069, and JP-A 8-73739, technology for forming fine metal oxides in polyimide resins is developed. According to such a method, since the size of metal oxides is reduced, it is effective for improving transparency of the materials as well as reducing the thermal expansion coefficient of the polyimide resin from room temperature to high temperatures. But such a method is small in effect for suppressing changes in modulus of elasticity and thermal expansion coefficient of polyimide materials against thermal change.

On the other hand, JP-A 10-298405 discloses a process for adding a silane alkoxide containing an epoxy group to an epoxy resin, followed by thermal curing. After thermal curing, the resin is improved in thermal dimensional stability at high temperatures due to disappearance of a glass transition temperature. But, this process has a problem of causing a large shrinkage at the time of curing and warpage is inevitable at the time of producing the substrate or tape carrier.

### SUMMARY OF THE INVENTION

It is an object of the present invention to provide a heat resistant resin composition high in heat resistance without damaging inherent processability of polyimide resin, excellent in thermal dimensional stability with almost no change in thermal expansion coefficient under temperature conditions of production process and use of product obtained therefrom, i.e. at a temperature range of from -50°C to 400°C, and excellent in dynamic properties at high temperatures with almost no change in modulus of elasticity, and a process for producing such a resin composition.

The present invention provides a heat resistant resin composition comprising a polyimide and an organic silicic compound of the formula (1) or (2): 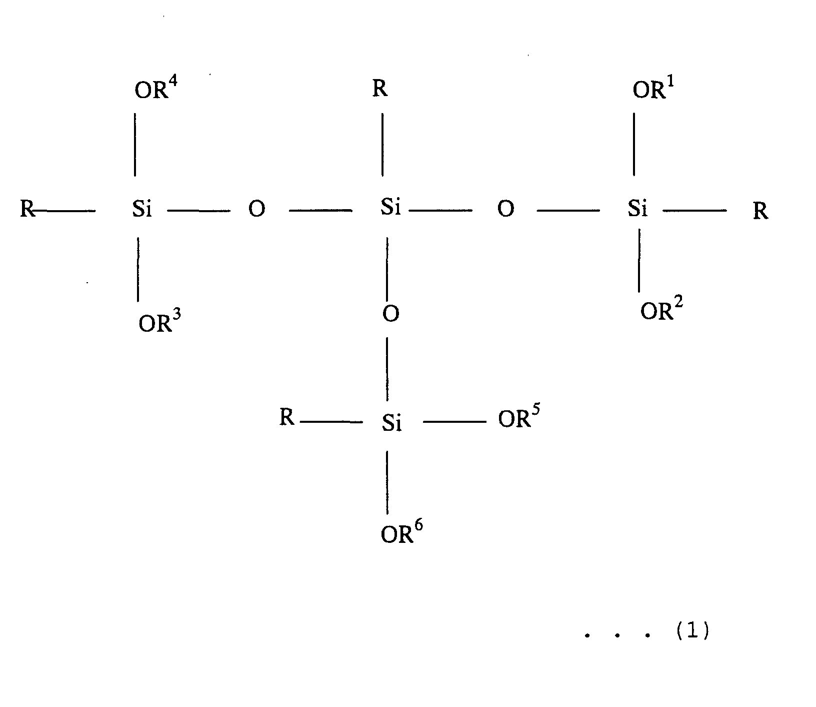 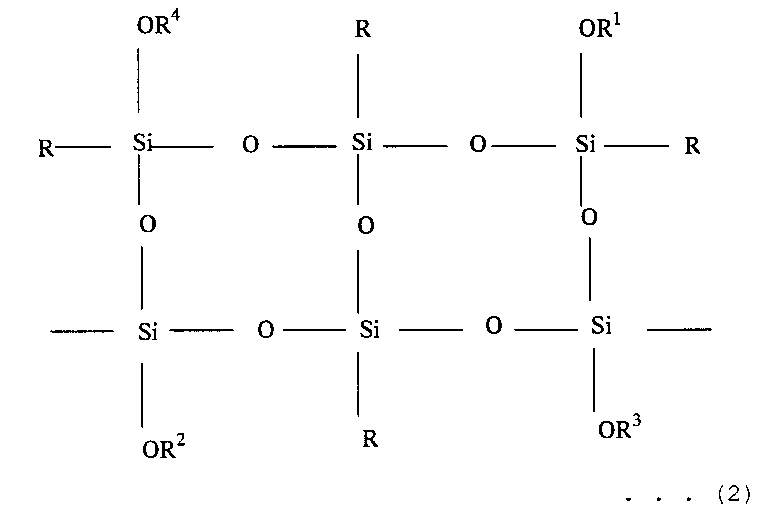 wherein R is an organic group which forms a covalent bond with the polyimide; and R¹, R², R³, R⁴, R⁵ and R⁶ are independently a silicon-containing group having 0 to 3 groups of (SiRO_{3/2}) as repeating units, provided that when (SiRO_{3/2}) is zero, R¹, R², R³, R⁴, R⁵ and R⁶ are independently H, CH₃ or C₂H₅.

The present invention further provides a heat resistant film using the heat resistant resin composition mentioned above.

The present invention also provides a poly(amic acid varnish composition comprising a poly(amic acid) and an organic silicic compound of the formula (1) or (2): 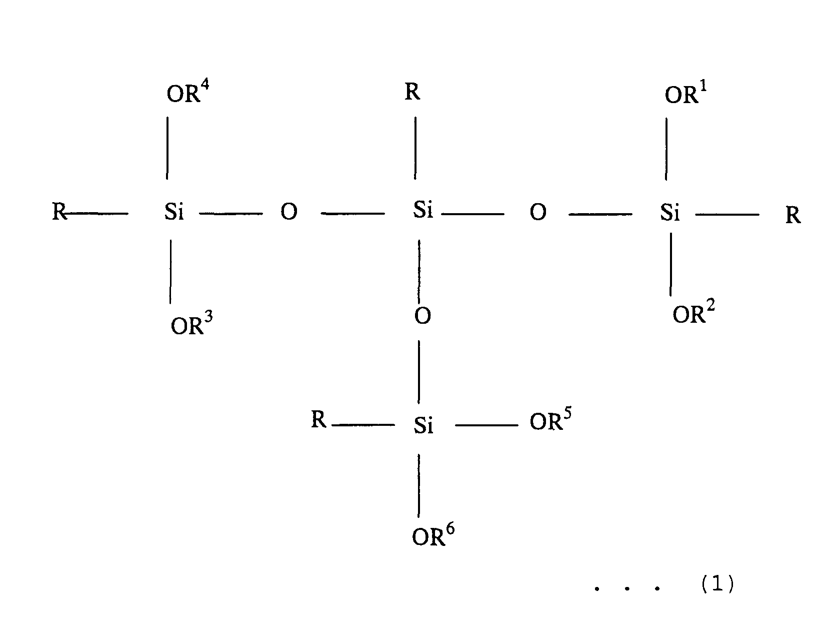 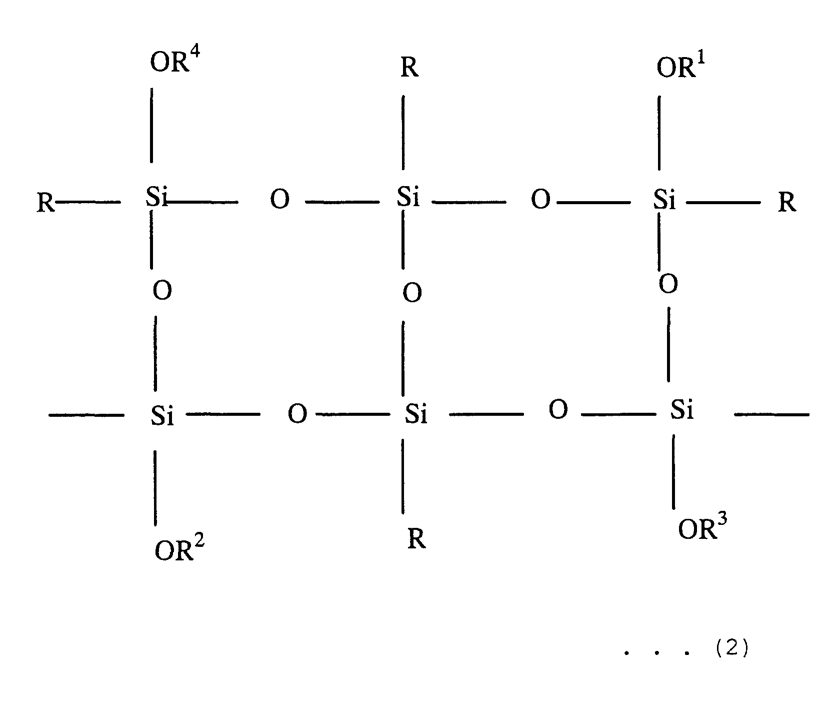 wherein R is an organic group having a functional group which brings about an addition reaction with at least one of NH group and COOH group in the poly(amic acid); and R¹, R², R³, R⁴, R⁵ and R⁶ are independently a silicon-containing group having 0 to 3 groups of (SiRO_{3/2}) as repeating units, provided that when (SiRO_{3/2}) is zero, R¹, R², R³, R⁴, R⁵ and R⁶ are independently H, CH₃ or C₂H₅.

The present invention still further provides a process for producing a heat resistant resin composition, which comprises heating a mixture comprising a poly(amic acid), an organic silicic compound having a functional group which brings about an addition reaction with at least one of NH group and COOH group, and water to conduct condensation, and curing the resulting condensate.

### DETAILED DESCRIPTION OF THE INVENTION

In order to attain the object mentioned above, it is important to suppress a difference in thermal expansion coefficients between the polyimide resin and the metallic material or inorganic material caused by a temperature change. For such a purpose, it is important to suppress a change in thermal expansion coefficient of polyimide resin caused by a temperature change. Particularly, it is important to suppress an enlargement of the thermal expansion coefficient at a temperature of glass transition temperature (Tg) or higher.

In order to suppress changes in properties caused by the temperature change, it is usually employed a process for forming a resin composite material by adding a filler having a diameter of several µm to 10 nm to the resin. But, according to this process, since the physical properties per se of the resin is not modified, the temperature dependence of physical properties of the resin composite material is the same as the case of using the resin alone. In order to suppress property changes of the resin caused by temperature change, it is important to produce a molecular level substance which is small in property changes with temperature changes in the resin.

The present inventors have found that when poly(amic acid), an organic silicic compound and water are heat-treated in a mixed state, an oligomer-size of the organic silicic compound is produced in the resin, and this is also effective to obtain a poly(amic acid) varnish having a low viscosity. Here, the silicic compound should have a functional group capable of bringing about an addition reaction with at least one of NH group and COOH group in the poly(amic acid).

When a mixture of the poly(amic acid), organic silicic compound and water is subjected to heat treatment, a condensation reaction between silicic compounds takes place, resulting in easily forming an oligomer-size organic silicic compound in the poly(amic acid) varnish as well as enhancing dispersibility of the organic silicic compound.

That is, according to the present invention, by introducing organic silicic compounds in nanometer level size into a polyimide resin, SiO₂ skeleton which is stable in dynamic properties is produced uniformly in the polyimide resin in molecular level. Further, by providing functional groups which can covalently bond to the resin at the ends of the SiO₂ skeleton, there can be obtained a heat resistant resin composition wherein the SiO₂ skeleton and the resin are bonded covalently.

The heat resistant resin composition comprises a polyimide and an organic silicic compound of the formula (1) or (2): 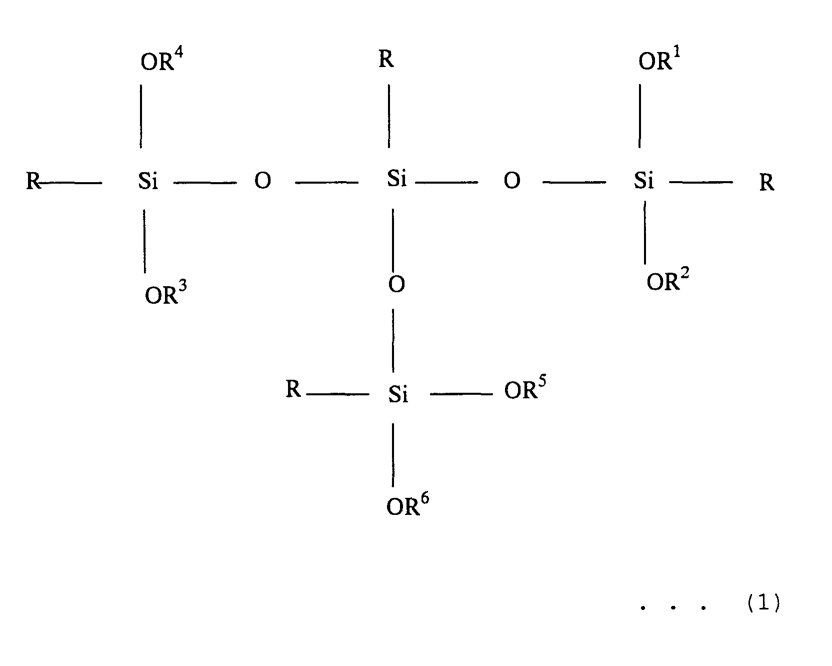 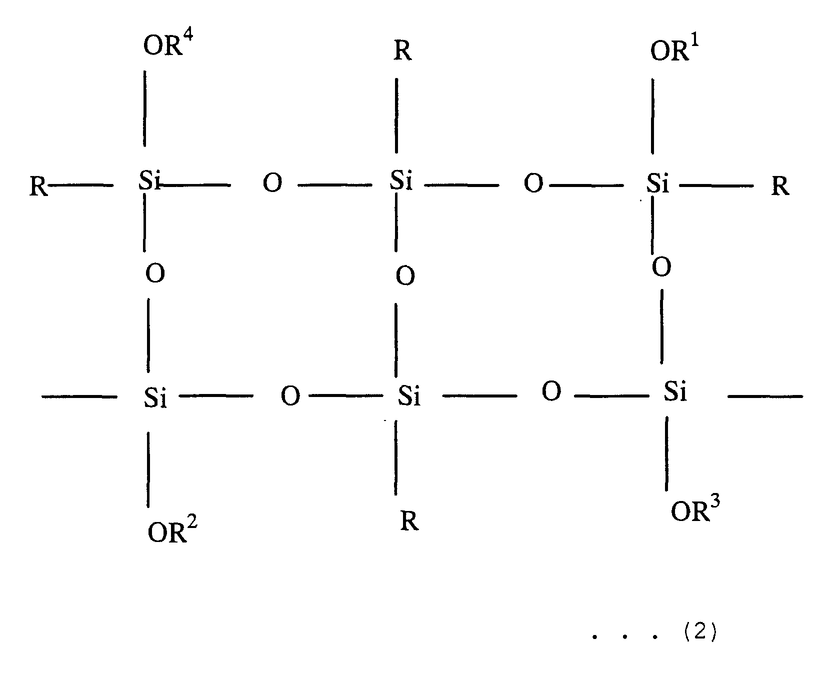 wherein R is an organic group which forms a covalent bond with the polyimide; and R¹, R², R³, R⁴, R⁵ and R⁶ are independently a silicon-containing group having 0 to 3 groups of (SiRO_{3/2}) as repeating units, provided that when (SiRO_{3/2}) is zero, R¹, R², R³, R⁴, R⁵ and R⁶ are independently H, CH₃ or C₂H₅.

A cured resin obtained by curing the poly(amic acid) varnish composition of the present invention is high in heat resistance, almost disappearing a glass transition point, small in changes of thermal expansion coefficient, and high in thermal dimensional stability at high temperatures. This seems to be caused by the oligomer-size organic silicic compound cured in uniformly dispersed state in the resin. When the heat resistant resin composition of the present invention is used in module substrates, thin film layers for substrates for package, and insulating films for tape carriers, etc. and composite materials of metals and ceramics, generation of thermal stress is little. Therefore, there hardly arise warpage, cracks, delaminations at interfaces in the composite materials with metals and c ceramics.

When thermally cured resin of the heat resistant resin composition of the present invention is subjected to ²⁹Si-NMR chemical shift measurement, absorption appears in the range of -40 ppm to -75 ppm. Among them, integrated value of peaks from -53 ppm to - 72 ppm is 1 to 30 times as large as that of peaks from -40 ppm to -52 ppm. This means that the organic silicic compound in the resin forms Si-O-Si bonds and increases the molecular weight. In the heat resistant resin composition, the organic silicic compound is formed in the resin varnish, and the organic silicic compound is distributed uniformly in the heat resistant resin composition.

However, when the organic silicic compound is only mixed with water and not mixed with a poly(amic acid) varnish using a solvent, followed by heat treatment, no oligomer-level organic silicic compound is formed. The silicic compound is solidified or becomes a high viscosity solution of 10000 poises or more. Even if the poly(amic acid) varnish is mixed after the heat treatment, it is impossible to obtain a uniform mixture in molecular level.

²⁹Si-NMR chemical shift of a monomer of the organic silicic compound of the formula: 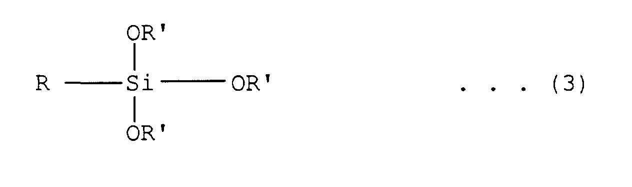 wherein R is an organic group having a functional group which brings about an addition reaction with at least one of NH group and COOH group in the poly(amic acid); and R' is CH3 or C₂H₅, has an absorption at -41 ppm to -44 ppm.

²⁹Si-NMR chemical shift of organic silicic compound having one -O-Si bond and represented by the formula: 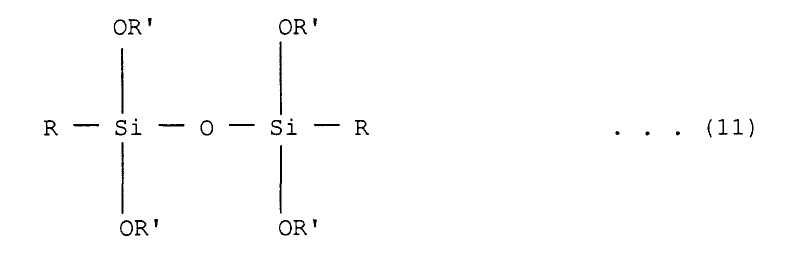 has an absorption at -48 ppm to -52 ppm.

²⁹Si-NMR chemical shift of organic silicic compound having two -O-Si bonds and represented by the formula: 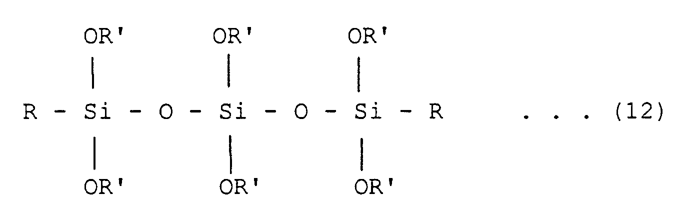 has an absorption at -53 ppm to -63 ppm.

²⁹Si-NMR chemical shift of organic silicic compound having three -O-Si bonds and represented by the formula: 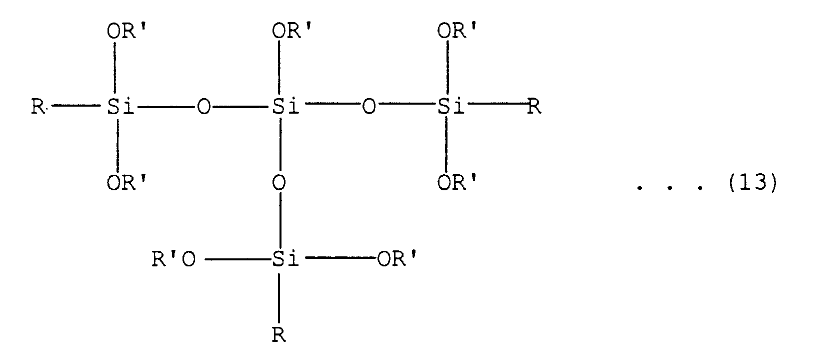 has an absorption at -63 ppm to -72 ppm.

Another feature of the present invention is to subject a mixture of a poly(amic acid), a silicic compound of the formula: 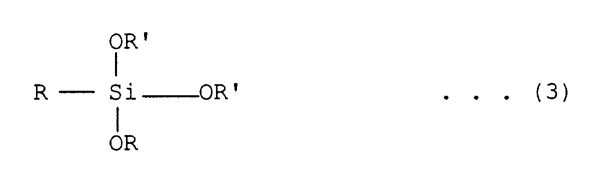 wherein R and R' are as defined above, and water to heat treatment at 60°C to 150°C, preferably 60 to 130°C, for 0.5 to 4 hours, followed by thermal curing.

The water is preferably used in an amount of 0.02 to 3 moles per mole of the organic silicic compound. When the mixture of poly(amic acid), organic silicic compound and water is produced, a solvent such an organic solvent can be used.

As the polyimide resin, there can be used conventional ones, which can be prepared by reacting one or more acid components such as acid dianhydrides or derivatives thereof with one or more amine components such as diamines or derivatives thereof to produce a poly(amic acid), followed by ring closure with heating or chemically.

As the acid component, there can be used tetracarboxylic acid anhydrides such as butanetetracarboxylic dianhydride, pyromellitic dianhydride, benzophenonetetracarboxylic dianhydride, diphenylsulfonetetracarboxylic dianhydride, diphenylethertetracarboxylic dianhydride, biphenytetracarboxylic dianhydride, diphenylpropanetetracarboxylic dianhydride, diphenylhexaflluoropropanetetracarboxylic dianhydride, etc. These acid dianhydrides can be used alone or as a mixture thereof.

As the amine component, there can be used hexamethylenediamine, tetramethylenediamine, 4,4-diaminocyclohexane, 4,4-diaminodicyclohexylmethane, 1,3-bis-(amino-methyl)cyclohexane, 1,4-bis-(aminomethyl)cyclohexane, p-phenylenediamine, m-phenylenediamine, 4,4-diaminodiphenyl ether, 3,3-diaminocyclohexane, 4,4-diaminodiphenylmethane, 2,4-dimethyl-m-phenylenediamine, 5-nitro-m-phenylenediamine, 5-nitro-p-phenylenediamine, 5-chloro-m-phenylinediamine, 4,4-diaminodiphenylhexafluoropropane, 3,3-diaminodiphenylhexafluoropropane, 4,4-diaminodiphenylsulfone, 4,4-diminodiphenylsulfide, 3,3-diaminodiphenylsulfide, 4,4-diaminobenzophenone, 3,3-diaminobenzophenone, 4,4-diaminobiphenyl, 3,3-diaminobiphenyl, etc. These diamines can be used alone or as a mixture thereof.

As the organic silicic compound of the formula (3), there can be used the following compounds of the formulae (4) to (13) having functional groups.

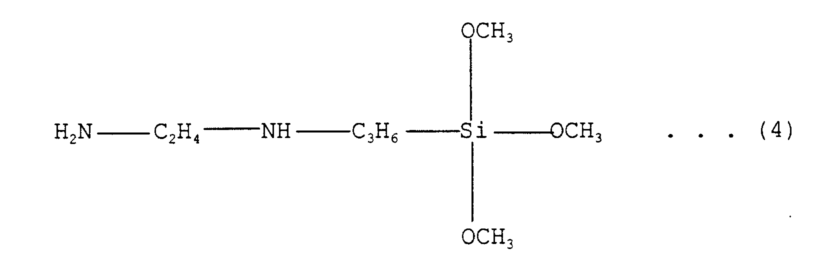

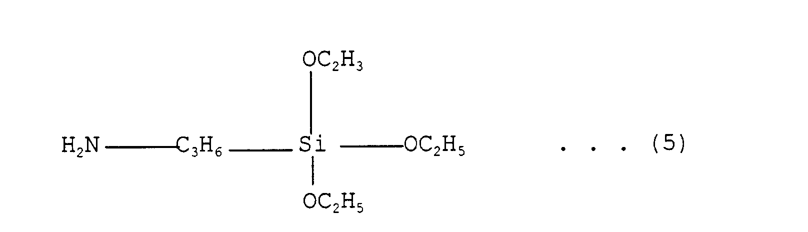

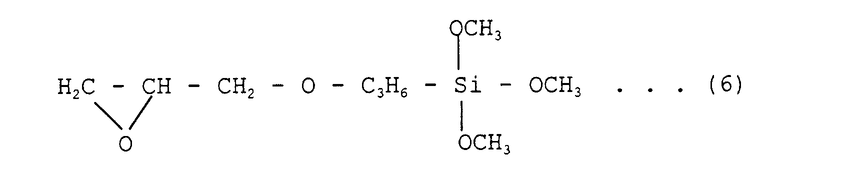

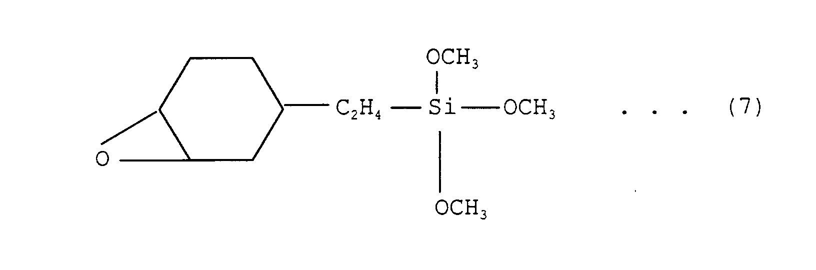

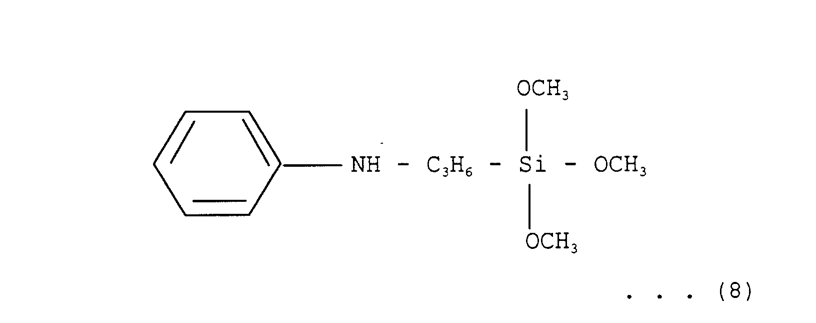

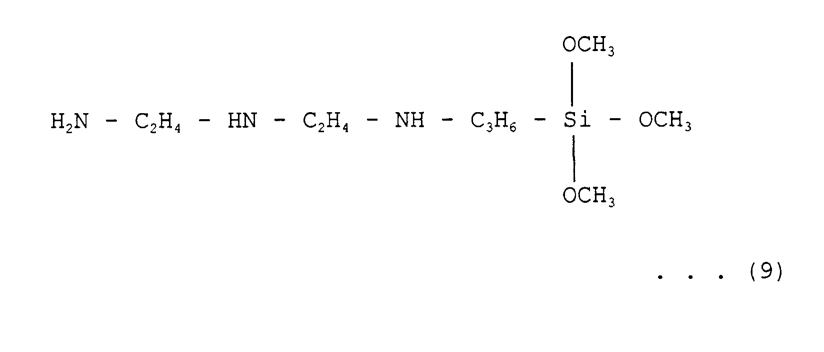

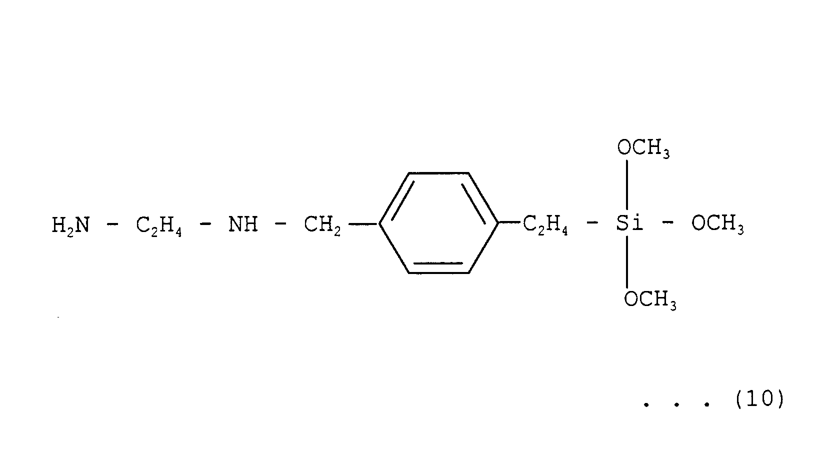

The present invention is illustrated by way of the following Examples, but needless to say, the present invention is not limited thereto.

### Example 1

A heat resistant resin composition was prepared by using 3-glycidoxytrimethoxysilane as an organic silicic compound, tin dibutyldilaurate as a hydrolysis catalyst, and poly(amic acid).

The poly(amic acid) was synthesized from equal equivalent weight of 3,3',4,4'-benzophenonetetracarboxylic dianhydride and p-phenylenediamine in N-methyl-2-pyrrolidone.

The production steps were as follows.
(1) To 20 g of 3-glycidoxytrimethoxysilane, 2 g of water and 0.2 g of tin dibutyldilaurate were added and stirred, followed by standing at room temperature 1 day or more.
(2) To 300 g of the poly(amic acid) solution containing 14% by weight of the resin component dissolved in N-methyl-2-pyrrolidone, the mixture of above (1) was added and stirred.
(3) The resulting mixture obtained in (2) was heat treated at 100°C for 2 hours for condensation reaction to give a varnish.
(4) The resulting varnish was dried.
(5) Subsequently, the dried product was heated in a nitrogen atmosphere for thermal curing to give a heat resistant resin composition.

In this Example, the heat resistant resin composition in a film state in 20 µm thick was produced and subjected to various tests. The film-state heat resistant resin composition was prepared as follows. The varnish obtained in above (3) was coated on a releasable polyester film using an applicator, dried at 100°C for 5 minutes and at 150°C for 10 minutes, followed by peeling from the releasable film. After heat curing at 200°C for 1 hour and 350°C for 1 hour in a nitrogen atmosphere, the film-state heat resistant resin composition 1 was obtained.

Test pieces for measuring physical properties were prepared from the film-state heat resistant resin composition 1 and subjected to measurement of thermal expansion and kinematic viscoelasticity under the following conditions:

### (I) Thermal expansion

Apparatus: TMA-3000 mfd. by Shinku Rikou Co., Ltd.
Temperature-elevating rate: 2°C/min.
Interchuck distance: 20 mm
Load: 5 g

### (II) Kinematic viscoelasticity

Apparatus: PVE Rheospectra apparatus mfd. by Rheology Co., Ltd.
Temperature-elevating rate: 2°C/min.
Freequency: 10 Hz
Interchuck distance: 20 mm
Displacement amplitude: 2 µm

The amount of SiO₂ component in the heat resistant resin composition was obtained by burning the heat resistant resin composition in a platinum crucible at 1000°C in the air, measuring the amount of SiO₂ as a residue, and conducting calculation.

Thermal expansion coefficient and storage modulus of elasticity, each at 50°C and 350°C, SiO₂ contents in the heat resistant resin compositions, ratios of integrated values of peaks of ²⁹Si-NMR chemical shift, and average numbers of repeating units of (SiRO_{3/2}) as to R¹, R², R³, R⁴, R⁵ and R⁶ in the formula (1) are listed in Table 1.

### Example 2

In this Example, there were used N-(2-aminoethyl)-3-aminopropyltrimethoxysilane as the organic silicic compound, tin dibutyldilaurate as the hydrolysis catalyst, and poly(amic acid) obtained from 3,3',4,4'-biphenyltetracarboxylic dianhydride and p-phenylenediamine in equivalent weight in N,N-dimethylacetamide.

The heat resistant resin composition was produced by the following steps.
(1) To 20 g of N-(2-aminoethyl)-3-aminopropyltrimethoxysilane, 1 g of water and 0.2 g of tin dibutyldilaurate were added, and stirred, followed by standing at room temperature for 1 day or more.
(2) To 300 g of the poly(amic acid) solution dissolved in N,N-dimethylacetamide with 14% by weight of the resin content, the mixed solution obtained in (1) was added and stirred.
(3) The resulting mixed solution obtained in (2) was heat treated at 120°C for 1 hour to give a varnish. In the same manner as in Example 1, the varnish was dried, and heat treated to give the heat resistant resin composition 2.

Test pieces were prepared from the heat resistant resin composition 2 in the same manner as described in Example 1 and subjected to the measurement of the thermal expansion coefficient and kinematic viscoelasticity in the same manner as in Example 1. The results are shown in Table 1.

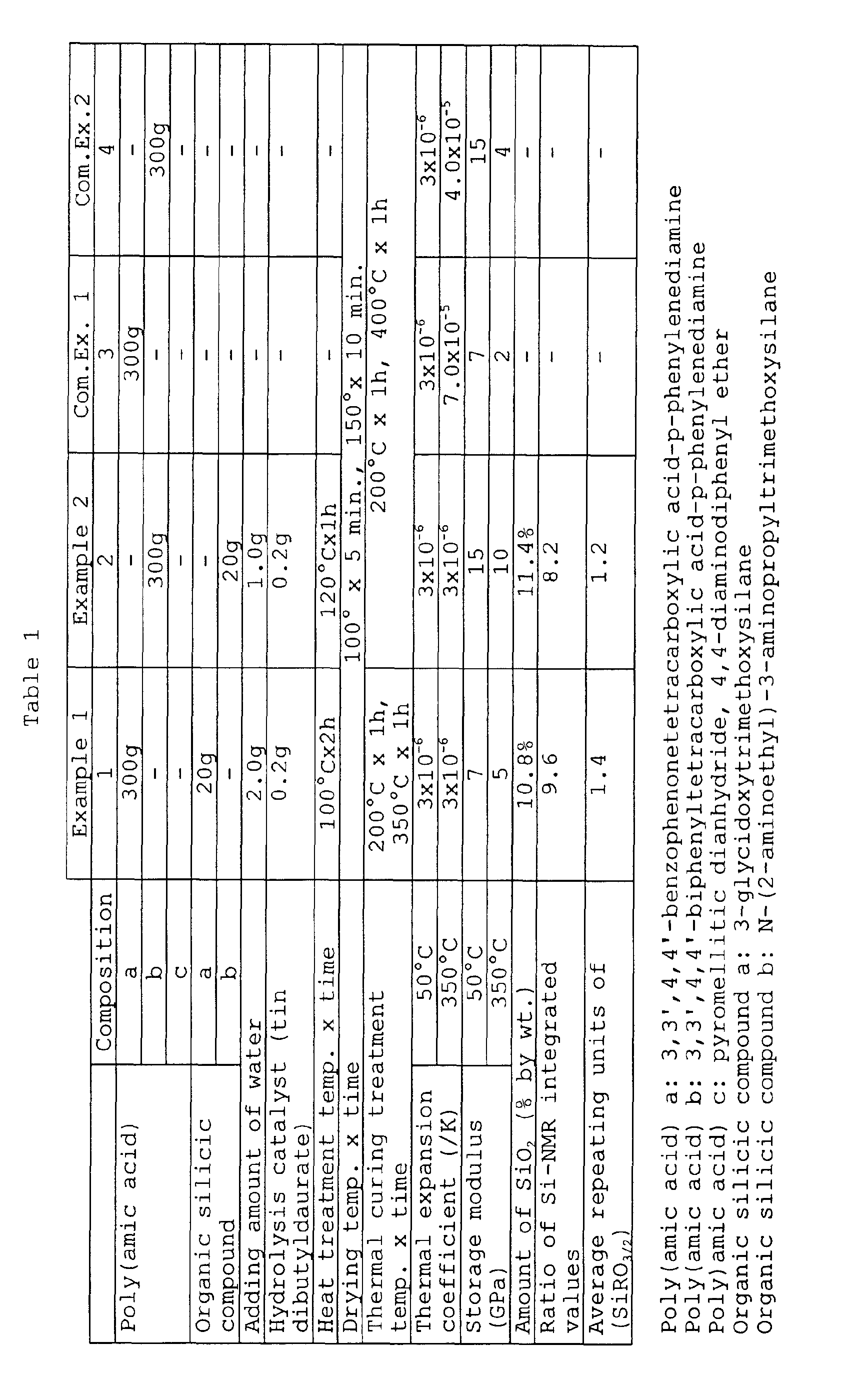

In Composition Nos. 1 and 2, the thermal expansion coefficients at 350°C are 150% or less of those at 50°C, so that the increase of thermal expansion coefficient is suppressed. Thus, the Compositions 1 and 2 are large in thermal dimensional stability at high temperatures. Further, the storage modulus of elasticity at 350°C is 50% or more of that at 50°C, respectively. Thus, the decrease of the storage modulus of elasticity is suppressed. As a result, Compositions 1 and 2 are small in changes in dynamic properties.

The ratio of integrated value of peak from -53 ppm to -72 ppm in ²⁹Si-NMR chemical shift to that from -40 ppm to -52 ppm is 9.6 in the case of Composition 1 and 8.2 in the case of Composition 2, meaning that the organic silicic compounds are in an oligomer level molecules. The SiO₂ conentent in the heat resistant resin composition is 10.8% by weight in the case of Composition 1 and 11.4% by weight in the case of Composition 2.

As mentioned above, since the heat resistant resin compositions of Examples 1 and 2 are small in changes in the thermal expansion coefficients at high temperatures, the thermal dimensional stability at high temperatures is high. Further, since the changes in modulus of elasticity at high temperatures are small, these compositions are excellent in dynamic properties at high temperatures. When the heat resistant resin compositions of Examples 1 and 2 are used in module substrates, thin film layers for substrates for packages and as composite materials with metals, ceramics, etc. for insulating films for tape carriers, there take place almost no warpage, cracks and peeling at interfaces due to generation of little thermal stress. The heat resistant resin compositions of Examples 1 and 2 are most suitable for electric appliances requiring high reliability.

### Comparative Examples 1 and 2

Resin compositions 3 and 4 obtained by using only poly(amic acid) without using an organic silicic compound and a hydrolysis catalyst are explained.

Resin composition 3 of Comparative Example 1 was obtained by preparing a poly(amic acid) from 3,3',4,4'-benzophenonetetracarboxylic dianhydride and p-phenylene-diamine in equivalent weights in N-methyl-2-pyrrolidone. Resin composition 4 of Comparative Example 2 was obtained by preparing a poly(amic acid) from 3,3',4,4'-biphenyltetracarboxylic dianhydride and p-phenylenediamine in equivalent weights in N,N-dimethylacetamide.

Poly(amic acid) varnishes obtained from Resin compositions 3 and 4 containing resin components in 14% by weight were coated and dried at 100°C for 5 minutes and at 150°C for 10 minutes, and subjected to heat treatment at 200°C for 1 hour and at 400°C for 1 hour. Test pieces were prepared from the resin compositions 3 and 4 in the same manner as in Example 1.

Thermal expansion coefficients and kinematic viscoelasticity were measured in the same manner as described in Example 1.

The results are shown in Table 1. The thermal expansion coefficients of the resin compositions 3 and 4 at 350°C are 10 times or more as large as those at 50°C. Thus, the thermal dimensional stability at high temperatures is smaller than that of the heat resistant resin compositions 1 and 2. Further, the storage modulus of elasticity is lowered to 1/4. This means that changes in the dynamic properties at high temperatures is large compared with the heat resistant resin compositions 1 and 2.

### Example 3

The heat resistant resin compositions used in this Example were obtained by using the same organic silicic compound and the hydrolysis catalyst as used in Example 1 and poly(amic acid) obtained from 3,3',4,4'-biphenyltetracarboxylic dianhydride and p-phenylenediamine in equivalent weights in N-methyl-2-pyrrolidone. In this Example, the concentrations of the organic silicic compound and the hydrolysis catalyst were changed to prepare two heat resistant resin compositions 5 and 6.

The heat resistant resin compositions 5 and 6 were produced by the following steps.
(1) A mixed solution A comprising 3.4 g of 3-glycidoxytrimethoxysilane, 0.34 g of water and 0.034 g of tin dibutyldilaurate, and a mixed solution B comprising 41.4 g of 3-glycidoxytrimethoxysilane, 4.14 g of water and 0.414 g of tin dibutyldilaurate were prepared, respectively, and stirred and standing at room temperature for 1 day or more.
(2) To 300 g of the poly(amic acid) solution dissolved in N-methyl-2-pyrrolidone with 14% by weight of the resin content, the mixed solution A or B was added and stirred to give varnishes A and B, respectively. These varnishes were dried, and heat treated in the same manner as described in Example 1 to give heat resistant resin compositions 5 and 6.

Test pieces were prepared from the heat resistant resin compositions 5 and 6 in the same manner as described in Example 1 and subjected to the measurement of the thermal expansion coefficients and kinematic viscoelasticity in the same manner as in Example 1. The results are shown in Table 2.

The thermal expansion coefficients of the resin compositions 5 and 6 at 350°C are 170% or less compared with those at 50°C, resulting in suppressing an increase of the thermal expansion coefficient. Thus, the thermal dimensional stability at high temperatures is large. Further, the storage modulus of elasticity at 350°C is 50% or more compared with that at 50°C. Lowering in the storage modulus of elasticity is suppressed. Thus, changes of dynamic properties at high temperatures are small. Further, the SiO2 content in the resin compositions are 2.0 and 20% by weight, respectively.

Since the heat resistant resin compositions of Example 3 are small in changes of thermal expansion coefficient at high temperatures as in the heat resistant resin compositions of Example 1 and 2, the thermal dimensional stability at high temperature is high. Further, since the changes of modulus of elasticity at high temperatures are small, the compositions are excellent in dynamic properties at high temperatures.

### Comparative Example 3

A resin composition 7 having different concentrations of the organic silicic compound and the hydrolysis catalyst compared with the resin compositions of Example 3 was prepared. That is, the resin composition 7 was prepared by futher using 2.0 g of 3-glycidoxytrimethoxysilane, 2.0 g of water and 0.02 g of tin dibutyldilaurate. A resin composition 8 was tried to prepare by further using 50 g of 3-glycidoxytrimethoxysilane, 5 g of water and 0.5 g of tin dibutyldilaurate, but it was difficult to use as a varnish, since the solution was solidified by heat treatment.

Test pieces were prepared from the resin composition 7 in the same manner as described in Example 1 and subjected to measurement of the thermal expansion coefficient and kinematic viscoelasticity in the same manner as described in Example 1. The results are shown in Table 2.

The thermal expansion coefficient of the resin composition 7b at 350°C was 10 times as large as that at 50°C. Thus, the resin composition 7 is small in the thermal dimensional stability at high temperatures compared with the heat resistant resin compositions 5 and 6. Further, the storage modulus of elasticity is lowered to 1/4, resulting in making the change of dynamic properties at high temperatures larger than that of the heat resistant resin compositions 5 and 6. The amount of SiO2 is 1.2% by weight based on the weight of the resin composition 7.

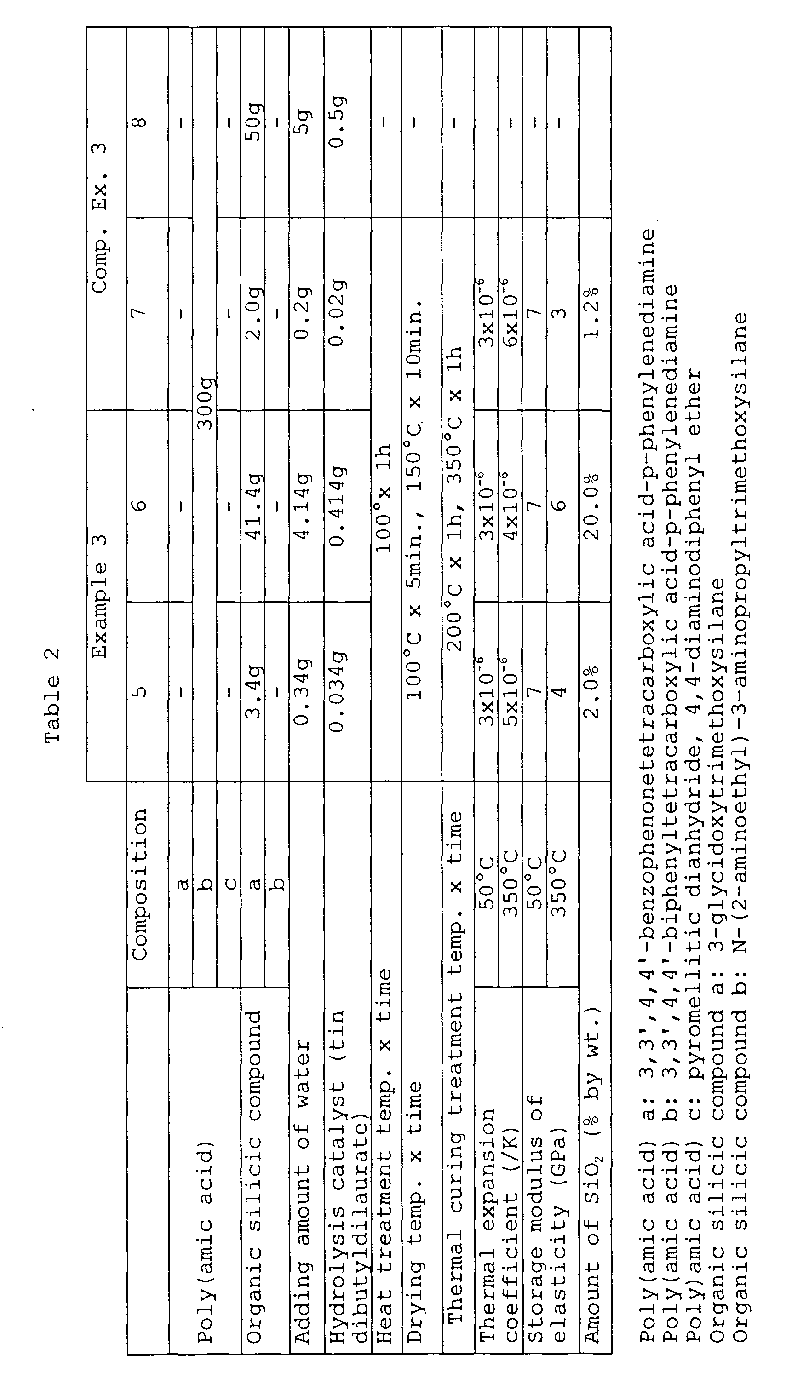

### Example 4

Heat resistant resin compositions were prepared by using the same organic silicic compound and hydrolysis catalyst as used in Example 1, and as the poly(amic acid) that obtained from 3,3',4,4'-biphenyltetracarboxylic dianhydride and p-phenylenediamine in equivalent weights in N-methyl-2-pyrrolidone in the same manner as described in Example 1. In this Example, 8 kinds of the heat resistant resin compositions 9 to 16 were prepared by changing the temperature and time for heat treatment for condensation. Each heat treatment condition is shown in Table 3.

Test pieces were prepared from these heat resistant resin compositions 9 to 16 in the same manner as described in Example 1 and subjected to the measurement of thermal expansion coefficients and kinematic viscoelesticity in the same manner as described in Example 1. The results are shown in Table 3.

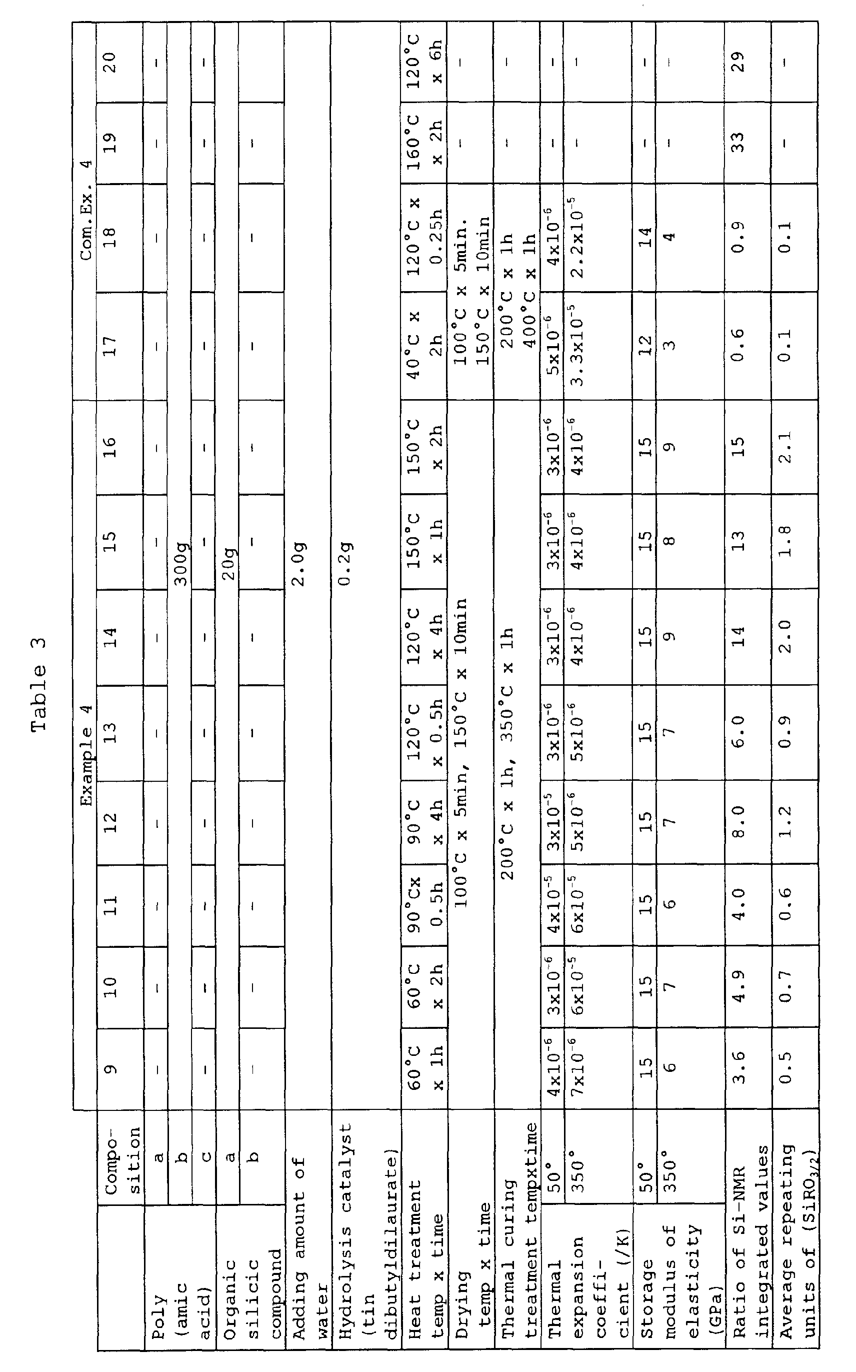

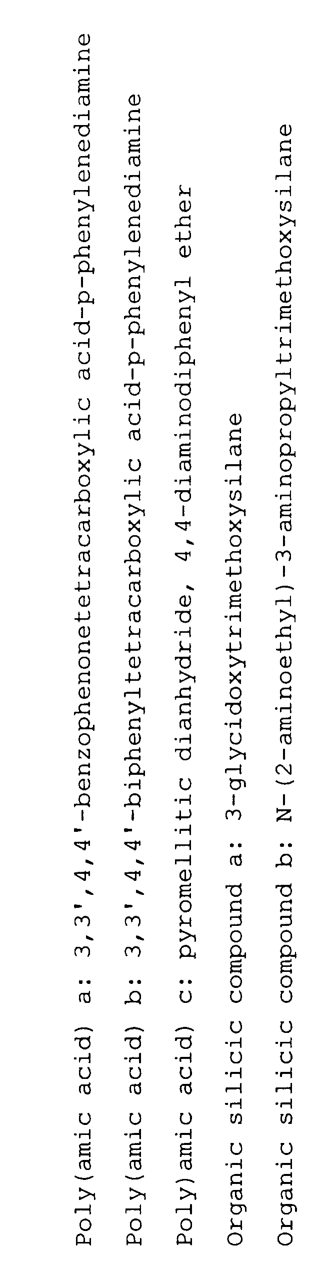

As shown in Table 3, the cured products from the heat resistant resin composition Nos. 9 to 16 have the thermal expansion coefficients at 350°C suppressed by 150% or less compared with the values at 50°C, resulting in making the thermal dimensional stability at high temperatures large. Further, since the values of storage modulus of elasticity at 350°C is 50% or more of the values at 50°C, lowering in the storage modulus of elasticity is suppressed, resulting in making the change in dynamic properties at high temperatures small. ²⁹Si-NMR chemical shift of integrated values of peaks from -53 ppm to -72 ppm of the heat resistant resin composition of this Example are 3.6 to 15 times as large as those from -40 ppm to -52 ppm, so that the silane compounds have the oligomer-level molecules.

### Comparative Example 4

Resin compositions were prepared by using poly(amic acid)s different from those used in Example 4. The poly(amic acid)s were produced by using 3,3',4,4'-benzophenone-tetracarboxylic dianhydride and p-phenylene-diamine in equivalent weights in N-methyl-2-pyrrolidone. Initial heat treatment temperature and time for condensation of the organic silicic compounds each other were changed to obtain two kinds of resin compositions 17 and 18. Individual heat treatments were at 40°C for 2 hours and at 120°C for 0.25 hour. The thermal curing condition was at 200°C for 1 hour and at 400°C for 1 hour, respectively.

On the other hand, varnish (resin) compositions 19 and 20 were prepared by changing the initial heat treatment temperature and time to at 160°C for 2 hours and at 120°C for 6 hours, respectively. Since these varnishes had too high viscosity to coat, so that preparation of resin compositions was abandoned.

Test pieces were produced from the resin compositions 17 and 18 in the same manner as described in Example 1 and subjected to the measurement of thermal expansion coefficients and kinematic viscoelasticity in the same manner as described in Example 1. The results are shown in Table 3.

The thermal expansion coefficients of the resin compositions 17 and 18 at 350°C is 5 times as large as those at 50°C. This means that the thermal dimensional stability at high temperatures is smaller than that of the heat resistant resin compositions of Example 3. Further, since the storage modulus of elasticity is lowered to 1/3, changes of dynamic properties at high temperatures are larger than those of the heat resistant resin compositions of Example 3. The SiO₂ content of the resin composition 17 was 1.2% by weight.

²⁹Si-NMR chemical shift of integrated values of peaks from -53 ppm to -72 ppm is 0.6 to 0.9 compared with the values from -40 ppm to -52 ppm in the case of the resin compositions 17 and 18, meaning that the organic silicic compounds were largely present in molecules of dimers to tetramers. In the case of the resin compositions 19 and 20, the organic silicic compounds were present in the polymer-level molecules.

### Example 5

Heat resistant resin composition 21 was prepared by using the same organic silicic compound and hydrolysis catalyst as used in Example 1 and poly(amic acid) obtained from pyromellitic dianhydride and 4,4-diaminodiphenyl ether in equivalent weights in N-methyl-2-pyrrolidone. The heat resistant resin composition was prepared in the same manner as described in Example 1, but the heat treatment for condensation reaction was carried out at 100°C for 2 hours, drying at 100°C or 10 minutes and at 150°C for 20 minutes, followed by thermal curing treatment at 200°C for 1 hour and 350°C for 1 hour. The heat resistant resin composition was formed into a film with 50 µm thick. Test pieces for measuring physical properties were formed from the heat resistant resin composition 21 in the same manner as described in Example 1 and subjected to measurement of thermal expansion coefficient and kinematic viscoelasticity in the same manner as described in Example 1. The results are shown in Table 4.

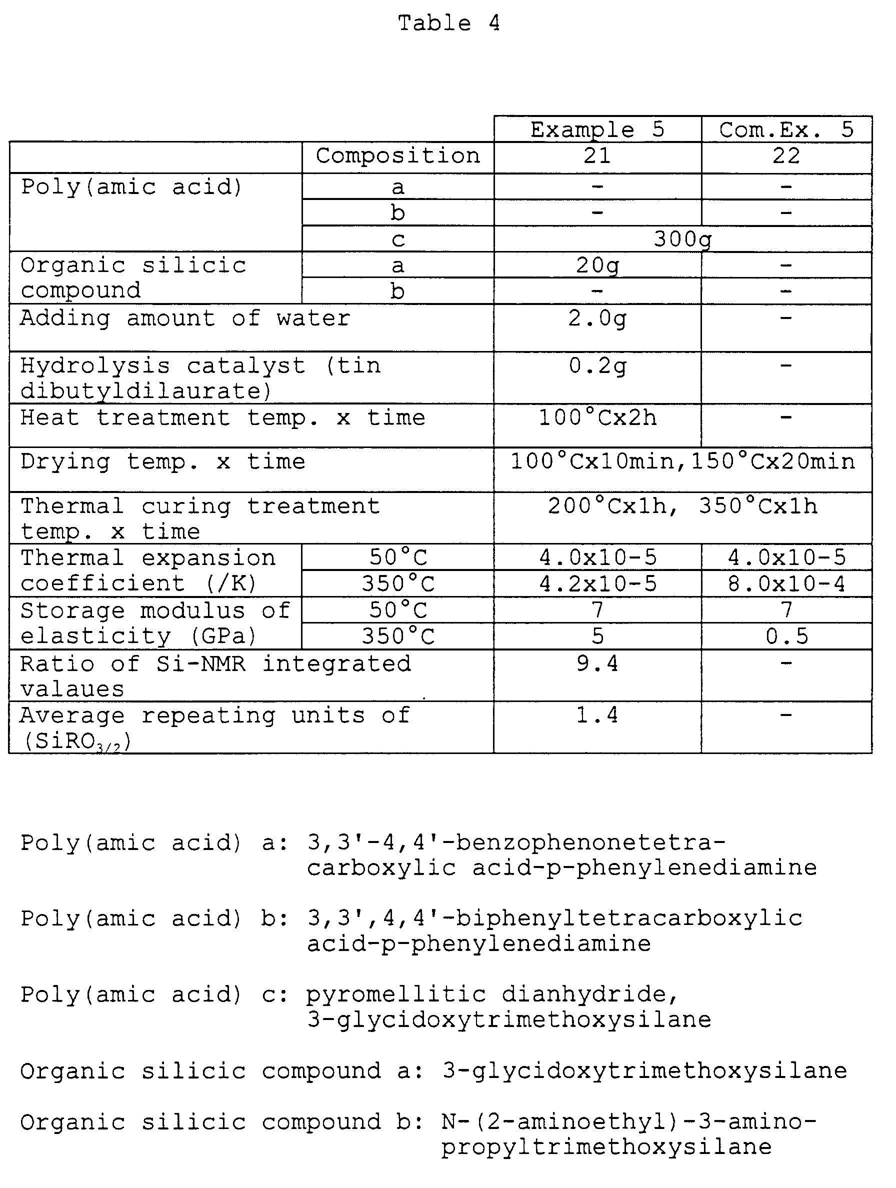

The thermal expansion coefficient at 350°C of the heat resistant resin composition 21 is 105% or less of the value at 50°C, meaning that an increase of the thermal expansion coefficient is suppressed. Further, the storage modulus of elasticity at 350°C is 50% or more of the value at 50°C, meaning that lowering of the storage modulus of elasticity is also suppressed. Therefore, the thermal stability at high temperatures was large.

²⁹Si-NMR chemical shift of integrated value of peaks from -53 ppm to -72 ppm of the heat resistant resin composition is 9.4 times as large as that from -40 ppm to -52 ppm, meaning that the organic silicic compound is present in oligomer-level molecules.

The heat resistant resin composition of Example 5 is high in thermal dimensional stability at high temperatures, since changes of thermal expansion coefficient and storage modulus of elasticity at high temperatures are small.

### Comparative Example 5

A resin composition 22 was prepared by only using a poly(amic acid) without using an organic silicic compound and a hydrolysis catalyst.

The poly(amic acid) was produced by using pyromellitic dianhydride and 4,4-diaminodiphenyl ether in equivalent weights in N-methyl-2-pyrrolidone. The poly(amic acid) was diluted with N-methyl-2-pyrrolidone so as to make the resin content 14% by weight. The resulting varnish was coated on a releasable polyester film using an applicator and dried at 100°C for 10 minutes and at 150°C for 20 minutes, followed by peeling from the releasable film to give a film compsition with 50 µm. The film composition was heat cured at 200°C for 1 hour and 350°C for 1 hour in a nitrogen atmosphere to give a resin composition 22.

Test pieces were formed from the resin composition 22 in the same manner as described in Example 1 and subjected to measurement of thermal expansion coefficient and kinematic viscoelasticity in the same manner as described in Example 1. The results are shown in Table 4.

The thermal expansion coefficient of the resin composition at 350°C is 20 times as large as that at 50°C and the storage modulus of elasticity is lowered to 1/10. Thus, thermal stability at high temperatures is poor.

As mentioned above, according to the present invention, since the heat resistant resin composition contains the SiO₂ skeleton, which has stable dynamic properties, uniformly in molecular level, changes of physical properties such as thermal expansion coefficient and storage modulus of elasticity with temperature changes are small and heat resistance is high. Thus, even if composite materials are prepared with metals, ceramics, resins, etc., no swelling at interfaces of the matrix and the resin takes place, and warpages, cracks and delaminations of produced articles do not take place.

In the case of semiconductor devices, the devices are subjected to heat history such as solder reflow during a production process and heat cycles, etc. at the time of use. As mentioned above, the heat resistant resin composition of the present invention is small in changes of physical properties depending on temperature changes, and high is heat resistance, so that there arise no warpage, peeling and cracks at interfaces in composite materials. Therefore, when the heat resistant resin composition is used in the semiconductor devices, high reliability is exhibited against the heat history mentioned above.

## Claims

1. A heat resistant resin composition comprising a polyimide and an organic silicic compound of the formula (1) or (2): 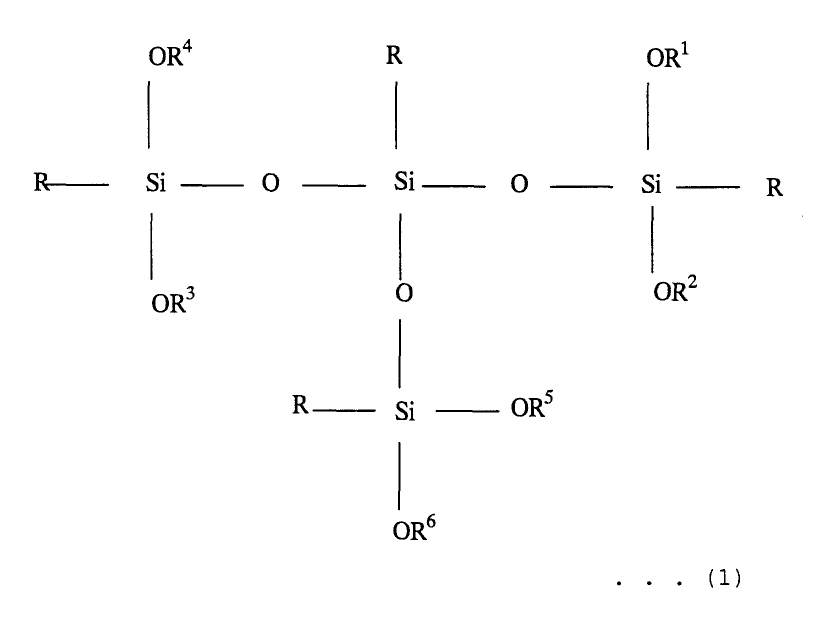 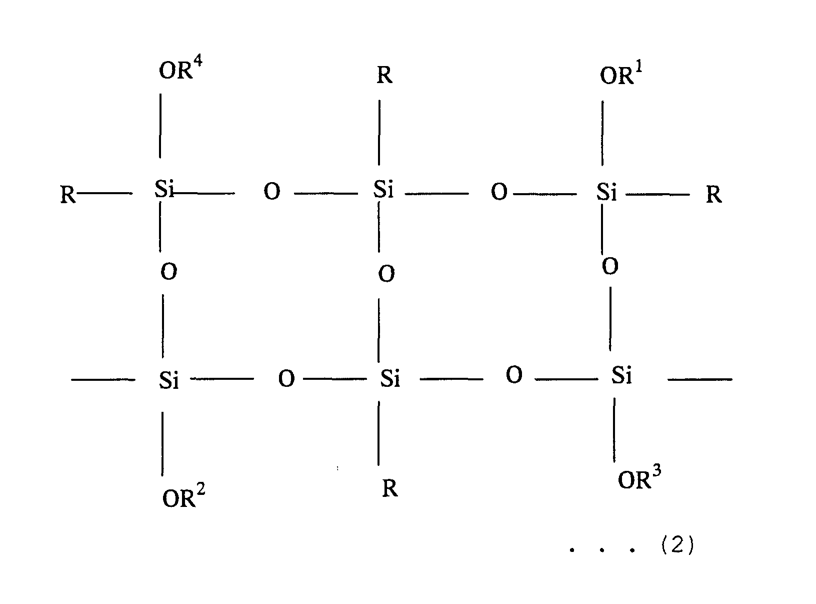 wherein R is an organic group which forms a covalent bond with the polyimide; and R¹, R², R³, R⁴, R⁵ and R⁶ are independently a silicon-containing group having 0 to 3 groups of (SiRO_{3/2}) as repeating units, provided that when (SiRO_{3/2}) is zero, R¹, R², R³, R⁴, R⁵ and R⁶ are independently H, CH₃ or C₂H₅.

2. A resin composition according to claim 1, wherein the amount of silicon in the resin composition is 2 to 20% by weight in terms of silica.

3. A resin composition according to claim 1, wherein the organic silicic compound has an integrated value of peaks from -53 ppm to -72 ppm in ²⁹Si-NMR chemical shift in an amount of 1 to 30 times as large as that of peaks from -40 ppm to -52 ppm.

4. A resin composition according to claim 1, wherein the resin composition provides a cured product having a storage modulus of elasticity at 25°C of 10 times or less of the value at 350°C, and a thermal expansion coefficient at near 25°C of 1/2 or more of the value at near 350°C.

5. A heat resistant film obtained by using the heat resistant composition of claim 1.

6. A poly(amic acid) varnish composition comprising a poly(amic acid) and an organic silicic compound of the formula (1) or (2): 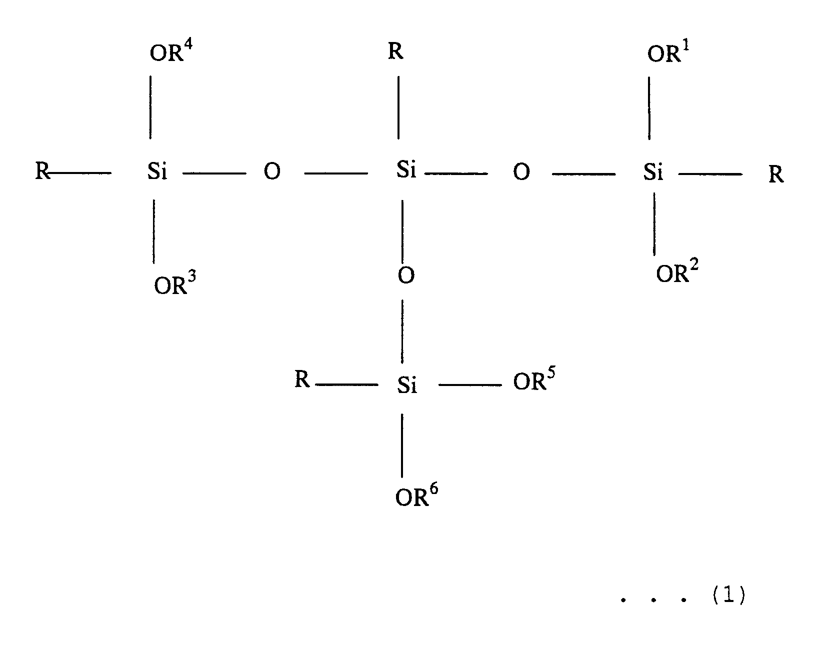 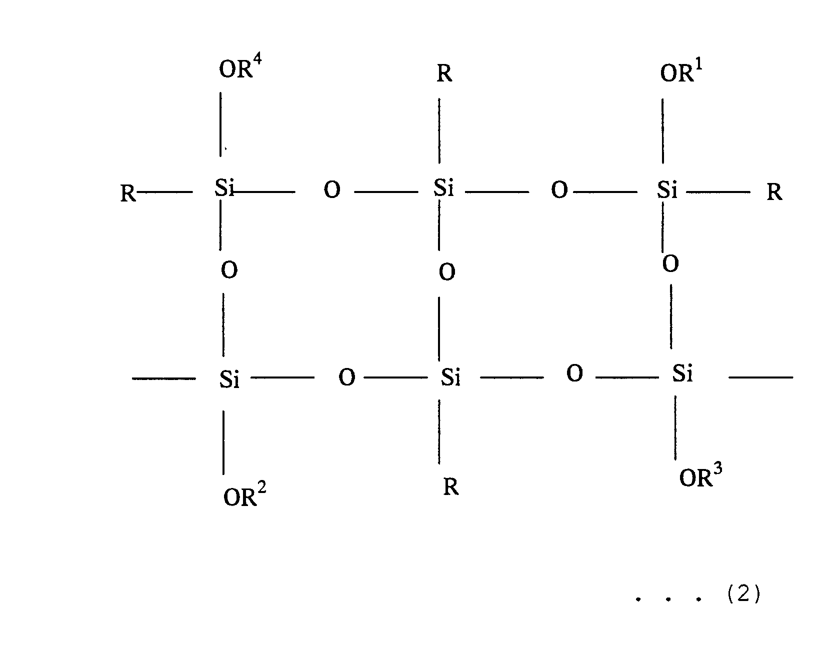 wherein R is an organic group having a functional group which brings about an addition reaction with at least one of NH group and COOH group in the poly(amic acid); and R¹, R², R³, R⁴, R⁵ and R⁶ are independently a silicon-containing group having 0 to 3 groups of (SiRO_{3/2}) as repeating units, provided that when (SiRO_{3/2}) is zero, R¹, R², R³, R⁴, R⁵ and R⁶ are independently H, CH₃ or C₂H₅.

7. A poly(amic acid) varnish composition according to claim 6, wherein the varnish composition contains silicon in an amount of 2 to 20% by weight in terms of silica.

8. A process for producing a heat resistant resin composition, which comprises
heating a mixture comprising a poly(amic acid), an organic silicic compound having a functional group which brings about an addition reaction with at least one of NH group and COOH group, and water to conduct condensation, and
curing the resulting condensate.

9. A process according to claim 8, wherein the organic silicic compound is represented by the formula: 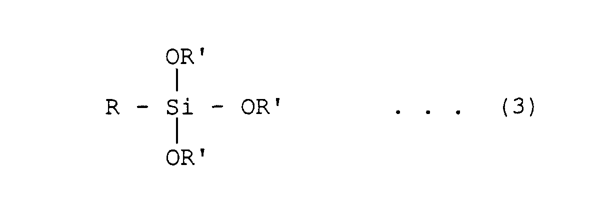 wherein R is an organic group having a functional group which brings about an addition reaction with at least one of NH group and COOH group in the poly(amic acid); R' is CH₃ or C₂H₅, and the condensation is carried out by heat treating the mixture at 60 to 150°C for 0.5 to 4 hours.
